Europäisches Patentamt

European Patent Office

Office européen des brevets

(11) Veröffentlichungsnummer: **0 264 093 B1**

(12) **EUROPÄISCHE PATENTSCHRIFT**

(45) Veröffentlichungstag der Patentschrift: **22.01.92**

(21) Anmeldenummer: **87114853.2**

(22) Anmeldetag: **12.10.87**

(51) Int. Cl.⁵: **G01B 3/20**

(54) **Schiebelehre.**

(30) Priorität: **13.10.86 CH 4084/86**

(43) Veröffentlichungstag der Anmeldung:
**20.04.88 Patentblatt 88/16**

(45) Bekanntmachung des Hinweises auf die
Patenterteilung:
**22.01.92 Patentblatt 92/04**

(84) Benannte Vertragsstaaten:
**AT BE DE ES FR GB GR IT LU NL SE**

(56) Entgegenhaltungen:
**CH-A- 410 445**
**CH-A- 518 519**
**US-A- 4 570 349**
**US-A- 4 608 759**

(73) Patentinhaber: **PAV Präzisions-Apparatebau
Aktiengesellschaft
Schaaner Strasse 40
FL-9490 Vaduz(LI)**

(72) Erfinder: **Battlog, Stefan
im Montafon
A-6771 St. Anton 26(AT)**

(74) Vertreter: **Witte, Alexander, Dr.-Ing.
Witte, Weller & Gahlert Patent- und Rechtsanwälte Augustenstrasse 7
W-7000 Stuttgart 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft eine Schiebelehre mit einer Meßschiene und einem auf der Meßschiene verschiebbaren Griffschlitten, wobei ein Ende der Meßschiene sowie der Griffschlitten jeweils mit einem Fortsatz versehen sind, und an die Fortsätze austauschbare Meßschnäbel unterschiedlicher Formgebung anschraubbar sind.

Eine Schiebelehre der vorstehend genannten Art ist aus dem Dokument US-A-4 570 349 bekannt.

Schiebelehren werden in vielfältigen Ausführungen in der Technik verwendet, um Längen und Abstände sehr genau zu messen. Dabei werden Meßflächen oder Meßpunkte, die an Meßschenkeln angeordnet sind, in Anlage an das zu messende Objekt gebracht.

Nun gibt es Schiebelehren, bei denen die beiden Meßschenkel nach beiden Richtungen der Meßschiene ragen, wovon ein Teil für die Außenmessung, der andere Teil für die Innenmessung bestimmt ist. Andere Schiebelehren sind so ausgerüstet, daß die Tiefe einer Nut, ggf. sogar einer hinterschnittenen Nut, der Abstand von Löchern, der Abstand von windschief angeordneten Teilen, etc. gemessen werden können. Bei diesen herkömmlichen Schiebelehren ist es aber erforderlich, für eine bestimmte Meßaufgabe eine entsprechende Schiebelehre zu verwenden. Dies erfordert das Bereithalten und den Einsatz vieler verschiedener solcher Schiebelehren.

Die in dem eingangs genannten Dokument US-A-4 570 349 beschriebene Schiebelehre ist im wesentlichen von herkömmlicher Bauart. Die Schiebelehre ist am Ende der Meßschiene sowie an einer Seite des Griffschlittens mit jeweils zwei Meßschnäbeln versehen, die in entgegengesetzter Richtung von der Meßschiene bzw. vom Griffschlitten abstehen und zur Messung von Außenmaßen bzw. von Innenmaßen dienen, wie bereits erwähnt wurde.

Als Besonderheit kommt bei dieser bekannten Schiebelehre hinzu, daß die Meßschnäbel im Übergangsbereich zur Meßschiene bzw. zum Griffschlitten mit einer nutartigen Ausnehmung versehen sind. Diese Ausnehmung ermöglicht es, einen Meßschnabel-Adapter auf die ansonsten herkömmlich geformten Meßschnäbel aufzuschieben und in der genannten Ausnehmung formschlüssig zu verrasten. Die Adapter sind hierzu mit einer sich verjüngenden Nut versehen, die so dimensioniert ist, daß sie gerade über die sich ebenfalls zu ihren Spitzen hin verjüngenden Meßschnäbel der Schiebelehre aufgeschoben werden kann. Zum Fixieren der Adapter auf den Meßschnäbeln dient eine Rändelschraube, die seitlich an den Adaptern angeordnet ist. Die Adapter sind an ihren freien Enden mit Meßbolzen versehen, die sich in Verschieberichtung der Schiebelehre erstrecken. Diese Meßbolzen können unterschiedliche Gestaltung haben und dienen zum Vermessen von Schmuck-Edelsteinen.

Bei dieser bekannten Schiebelehre ist zunächst von Nachteil, daß eine relativ unhandliche Anordnung entsteht, bei der die Rändelschrauben seitlich weit vorstehen. Dies ist bei dem in dem Dokument genannten Einsatzfall der Vermessung von Schmuck-Edelsteinen nicht störend, weil die relativ kleinen Meßobjekte problemlos zwischen die Meßbolzen der Adapter verbracht werden können. Schiebelehren werden jedoch häufig auch dazu eingesetzt, um unter relativ beengten Verhältnissen Meßaufgaben auszuführen. Dann ist man bestrebt, die Außenkontur der Schiebelehren so wenig ausladend wie möglich zu gestalten.

Ein weiterer, wesentlicher Nachteil dieser Anordnung der bekannten Schiebelehre liegt darin, daß jeder der Adapter mit einer eigenen Befestigungseinrichtung (Rändelschraube) versehen sein muß, was den Aufwand bei mehreren Adaptern merklich erhöht.

Schließlich ist der bekannten Schiebelehre noch der Nachteil zueigen, daß die Positionierung der Adapter auf den Meßschnäbeln nach dem Anziehen der Rändelschrauben nicht in jedem Falle gewährleistet ist. Zwar greifen die Adapter mit Fortsätzen in die bereits erwähnte Nut an den Meßschnäbeln, so daß zusammen mit der sich verjüngenden Führung an den Adaptern eine definierte Positionierung der Adapter an den Meßschnäbeln erreicht werden kann, diese ist jedoch nicht zwingend, weil die Rändelschrauben lediglich die Kontaktflächen im Bereich der sich verjüngenden Führung durchdringen und daher auch eine Befestigung in einer anderen Ausrichtung der Adapter zu den Meßschnäbeln möglich ist.

Eine weitere Schiebelehre, die aus dem Dokument CH-A-518 519 bekannt ist, weist ebenfalls austauschbare Meßschnäbel auf. Diese Meßschnäbel sind jedoch entweder ebenfalls mit Rändelschrauben versehen und damit relativ aufwendig, oder aber es ist neben dem Adapterteil der Meßschnäbel noch ein gesondertes Befestigungselement erforderlich, um diese an den Meßschnäbeln der Schiebelehre anzubringen. Der mechanische Aufwand bei dieser bekannten Schiebelehre ist damit noch größer.

Ferner sind die Adapter dieser bekannten Schiebelehre lediglich mit einer Führung versehen, die in Richtung der Meßschnäbel verläuft, so daß eine definierte Positionierung der Adapter zu den Meßschnäbeln nur in einer Koordinatenrichtung parallel zur Verschieberichtung des Griffschlittens auf der Meßschiene möglich ist. Dies schränkt die Einsatzmöglichkeiten für eine solche Schiebelehre erheblich ein.

Aus einem weiteren Dokument CH-A-410 445 sind weitere Schiebelehren mit austauschbaren Meßschnäbel-Adaptern bekannt. Bei einem der in diesem Dokument beschriebenen Ausführungsbeispiele wird auch eine Anordnung verwendet, bei der an einem Fortsatz der Meßschiene eine Mutter vorgesehen ist, mit der ein von Befestigungsmitteln freier Meßschnabel-Adapter an diesem Fortsatz fixiert werden kann. Allerdings stellt sich auch bei dieser bekannten Schiebelehre das Problem, daß der Meßschnabel-Adapter lediglich in Richtung des Meßschnabels mittels einer Nut/Feder-Führung verschiebbar ist, so daß sich auch hier die vorerwähnten Nachteile einstellen.

Schließlich beschreibt das Dokument US-A-4 608 759 noch eine Schiebelehre mit Meßschnäbel-Adaptern, die jedoch mechanisch kompliziert aufgebaut sind und spezieller Werkzeuge bedürfen, um die Adapter an den Meßschnäbeln befestigen zu können.

Der Erfindung liegt die Aufgabe zugrunde, eine universell einsetzbare Schiebelehre zu schaffen.

Diese Aufgabe wird erfindungsgemäß dadurch gelöst, daß bei einer Schiebelehre der eingangs genannten Art die Fortsätze mit Fenstern versehen sind, durch die Köpfe von Rändelschrauben zugänglich sind, mittels derer die Meßschnäbel an die Fortsätze anschraubbar sind, wobei die Rändelschrauben Kontaktflächen zwischen den Meßschnäbeln und den Fortsätzen durchdringen, die sich parallel zur Meßschiene erstrecken.

Bei einem bevorzugten Ausführungsbeispiel der erfindungsgemäßen Schiebelehre umfaßt der Griffschlitten eine digitale Recheneinheit sowie eine Taste zum Nullen der Recheneinheit.

Bei einem weiteren bevorzugten Ausführungsbeispiel der Erfindung sind die Meßschnäbel mit zwei Kontaktflächen versehen, die zueinander einen Winkel von 90° einschließen.

Schließlich ist noch bevorzugt, wenn die Meßschnäbel ebenfalls Fenster mit Rändelschrauben zum Fixieren von Meßbolzen umfassen.

Die Erfindung wird anhand der Zeichnung beispielhaft näher erläutert. Es zeigen:

Fig. 1          eine perspektivische Darstellung eines Ausführungsbeispiels einer erfindungsgemäßen Schiebelehre;

Fig. 2 und 3   perspektivische Ansichten, ähnlich Fig. 1, von weiteren Schiebelehren, zur Darstellung weiterer möglicher Einzelheiten der Erfindung;

Fig. 4          einen Längsschnitt durch einen erfindungsgemäßen austauschbaren Meßschnabel;

Fig. 5 und 6   zwei verschiedene Zusammensetzmöglichkeiten einer erfindungsgemässen Schiebelehre, ebenfalls im Schrägriss; und

Fig. 7          einen Längsschnitt durch einen aus mehreren Lochscheiben bestehenden Schenkelendteil.

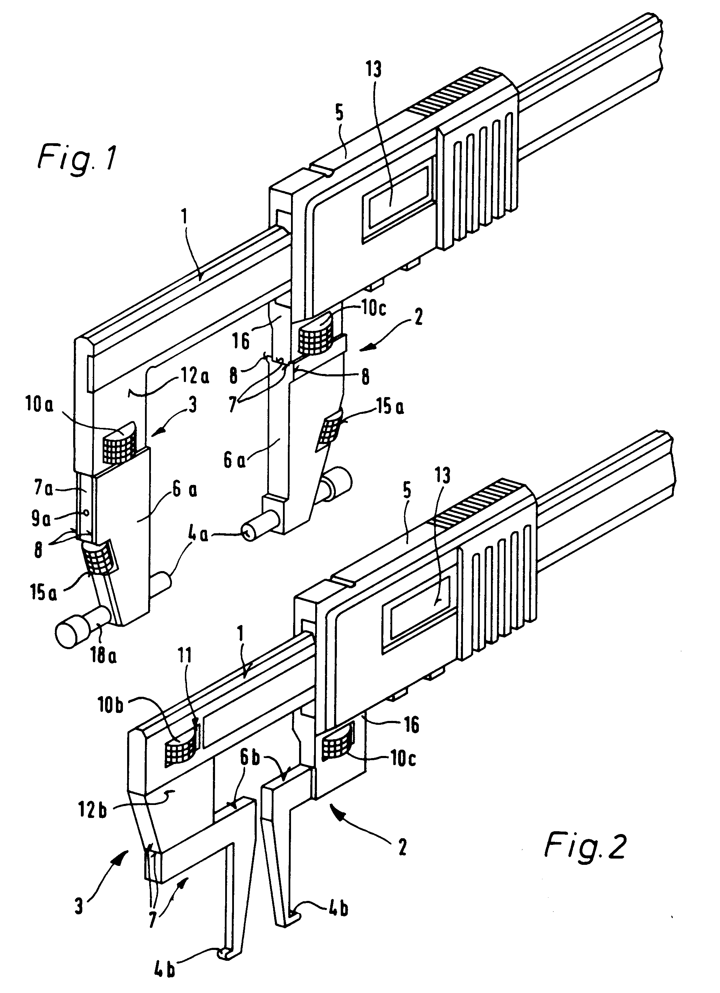

An einem Ende der Messschiene 1 ist ein starr festlegbarer Messschenkel 3 angeordnet. Der Messschenkel 3 besteht entweder aus einem mit der Messschiene 1 einstückig verbundenen Fortsatz/Zwischenstück 12a und einem Schenkelendteil 6a (Fig.1), oder aus einem gesondert ausgebildeten Zwischenstück 12b und einem Schenkelendteil 6b,6c (Fig. 2 bis 6).

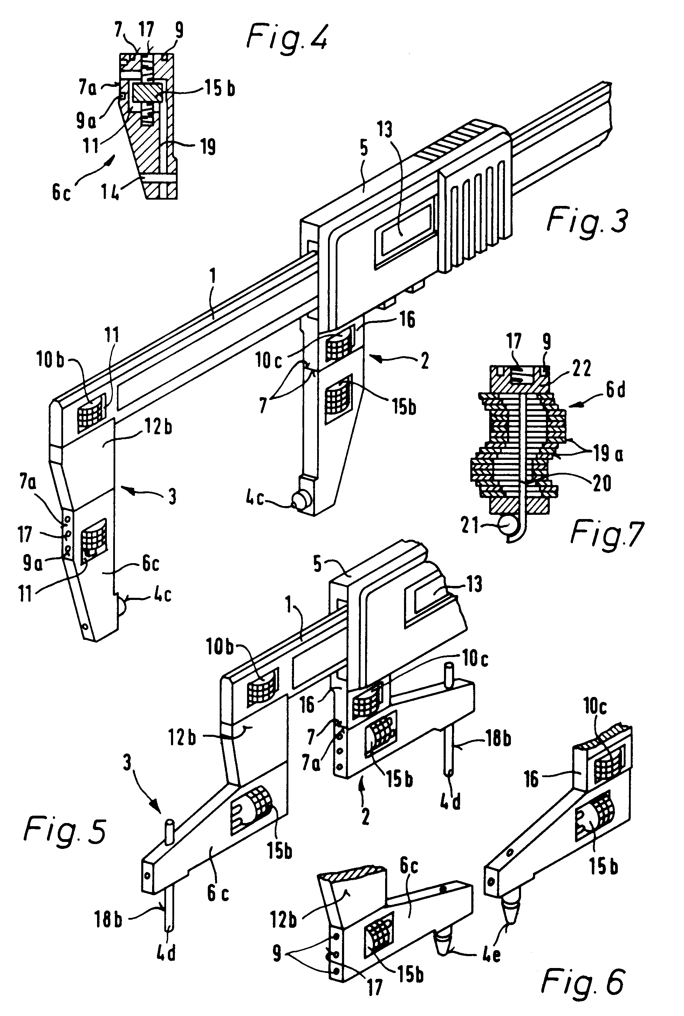

Die Schenkelendteile können noch von einer Lochführung 14 (Fig. 4) durchbrochen sein, in denen an sich bekannte Messflächen 4a,4c-e tragende Bolzen verschieb- und arretierbar angeordnet werden können. Die Arretierung erfolgt im dargestellten Beispiel mittels einer in einer Ausnehmung des Schenkelendteils 6a angeordneten Rändelschraube 15a (Fig. 1) oder einer in einem Fenster 11 des Schenkelendteils 6c angeordneten Rändelschraube 15b (Fig. 3 bis 6). Die Wirkungsweise dieser Rändelschraube ist aus Fig. 4 ersichtlich: der Rand ihres Betätigungskopfes schiebt beim (auf Fig. 4 bezogen) Niedergehen einen Bolzen 19 nach unten, dessen gekörnte Spitze einen in der senkrecht zu ihm verlaufenden Lochführung 14 befindlichen, in Fig. 4 nicht gezeigten, z.B. eine Messfläche oder einen Messpunkt 4 tragenden Bolzenteil 18a (Fig.1) oder 18b (Fig.5) arretiert.

Auf der Messschiene gleitet ein Griffschlitten 5 mit einer Recheneinrichtung 13 und einem mit dem Schlitten einstückig ausgeführten Fortsatz 16, in dem ebenfalls ein Fenster 11 für eine Rändelschraube 10c ausgebildet ist, die in ähnlicher Weise wirkt, indem ihr (nicht dargestellter) Gewinde teil in eine Gewindebohrung 17 ragt und für die Befestigung der Schenkelendteile 6 sorgt.

An den jeweils zusammenwirkenden Kontaktflächen 7 zweier zu verbindender Schenkelteile 12a,6a;16,6a;12b,6b;16,6b;     12b,6c;16,6c;1,12b muss eine exakte Führung ausgebildet sein; dies geschieht entweder durch die Ausbildung von Nut und Feder, wobei die Nut auch durch entlang der Aussenkanten des einen Schenkelteiles 6a ausgebildete Führungsleisten 8 gebildet sein kann (Fig. 1). Vorzugsweise werden diese Führungsleisten aber in dem Zwischenstück, bzw. Fortsatz 12;16 ausgebildet, damit verschiedene Schenkelendteile ohne diese Führungsleisten und damit billiger gefertigt werden können.

Eine andere Art der Führung ergibt sich durch Führungsbohrungen 9 in der einen Kontaktfläche, die mit (nicht dargestellten) Lagerzapfen in der Kontaktfläche des jeweils anderen Schenkelteils zusammenwirken. In den Fig. 3 bis 6 sind jeweils zwei solche Führungsbohrungen 9,9a im gleichen Abstand von der Gewindebohrung 17 vorgesehen, die für das Zusammenwirken mit dem (nicht dargestellen) Gewindeteil der Rändelschraube 10 zur exakten Fixierung der beiden Schenkelteile aneinander ausgebildet ist.

Wie aus den Fig. 3 bis 6 weiter ersichtlich, können an ein und demselben Schenkelendteil 6c zwei Kontaktflächen 7,7a ausgebildet sein, die im rechten Winkel zueinander liegen und das Zusammensetzen des Schenkelendteils 6c mit dem Zwischenstück 12b, bzw. dem Fortsatz 16 in drei verschiedenen Positionen gestattet (Fig. 3, 5, 6).

In Fig. 7 ist ein aus mehreren Lochscheiben 19 zusammengesetzter Schenkelendteil 6d dargestellt. Die Lochscheiben sind in an sich bekannter Weise mittels eines Spanndrahtes 20, z.B. über einen Exzenterhebel 21 zusammengespannt, der in einem Endstück 22 verankert ist; an der der Verankerung gegenüberliegenden Seite des Endstückes 22 sind die Kontaktfläche 7, die Führungsbohrungen 9 und die Gewindebohrung 17 für das Fixieren an einem Zwischenstück 12 oder Fortsatz 16, wie oben beschrieben, vorgesehen. Ein solcher Schenkel kann beispielsweise für die Anlage an Werkstücke mit unregelmässiger Oberfläche bestimmt sein.

Es versteht sich, dass die Erfindung nicht auf die dargestellten Ausführungsbeispiele beschränkt ist. So kann natürlich die für die Fixierung zweier Schenkelteile aneinander vorgesehene Rändelschraube 10 statt in der Messschiene 1 oder in einem Fortsatz 16 des Griffschlittens 5 auch im Zwischenstück 12b oder gar einem der Schenkelendteile 6 angeordnet sein, obwohl sie dann in jedem Schenkelendteil vorzusehen ist, was in aller Regel teurer zu stehen kommen wird als in der bevorzugten, oben beschriebenen Ausführungsform.

Weiters können die beiden Schenkelendteile 6c nicht nur in zwei um 180 Grad gegeneinander verschwenkten Positionen (Fig. 5 und 6) arretierbar sein, sondern in beliebigen Winkelgraden, vorzugsweise stufenlos.

Wie in anderem Zusammenhang an sich bekannt, können Messschenkel von der Messschiene 1 aus nicht nur in eine Richtung, sondern auch in die dazu entgegengesetzte Richtung, oder in einem Winkel dazu abragen, womit die Universalität der erfindungsgemässen Schiebelehre weiter gesteigert werden kann.

Während die Verarbeitung und Anzeige der abgegriffenen Werte in digitaler Form wie an sich bekannt erfolgten kann, lassen sich die erfindungsgemässen Schenkelendteile, gegebenenfalls auch die die Messflächen oder -punkte 4 tragenden Bolzen 18 entweder so ausbilden, dass beim Zusammensetzen, bzw. Positionieren automatisch der eingestellte Nullabstand programmässig berücksichtigt oder mit Hilfe von am Griffschlitten 5, bzw. der Recheneinrichtung 13 angeordneten, nicht dargestellten Tasten eingegeben wird.

## Patentansprüche

1. Schiebelehre mit einer Meßschiene (1) und einem auf der Meßschiene (1) verschiebbaren Griffschlitten (5), wobei ein Ende der Meßschiene (1) sowie der Griffschlitten (5) jeweils mit einem Fortsatz (12, 16) versehen sind, und an die Fortsätze (12, 16) austauschbare Meßschnäbel (6) unterschiedlicher Formgebung anschraubbar sind, dadurch gekennzeichnet, daß die Fortsätze (12, 16) mit Fenstern (11) versehen sind, durch die Köpfe von Rändelschrauben (10) zugänglich sind, mittels derer die Meßschnäbel (6) an die Fortsätze (12, 16) anschraubbar sind, wobei die Rändelschrauben (10) Kontaktflächen (7) zwischen den Meßschnäbeln (6) und den Fortsätzen (12, 16) durchdringen, die sich parallel zur Meßschiene erstrecken.

2. Schiebelehre nach Anspruch 1, dadurch gekennzeichnet, daß der Griffschlitten (5) eine digitale Recheneinheit (13) sowie eine Taste zum Nullen der Recheneinheit (13) umfaßt.

3. Schiebelehre nach Anspruch 1 oder 2, dadurch gekennzeichnet, daß die Meßschnäbel (6) mit zwei Kontaktflächen (7, 7a) versehen sind, die zueinander einen Winkel von 90° einschließen.

4. Schiebelehre nach einem oder mehreren der Ansprüche 1 bis 3, dadurch gekennzeichnet, daß die Meßschnäbel (6) ebenfalls Fenster mit der Rändelschraube (15) zum Fixieren von Meßbolzen (18) umfassen.

## Claims

1. A vernier sliding caliper comprising a measuring arm (1) and a sliding attachment (5) displaceable on said measuring arm (1), one terminal of said measuring arm (1) as wall as of said sliding attachment (5) being provided with one leg (12, 16) each, interchangeable measuring jaws (6) of various designs being provided for being bolted to said legs (12, 16), characterized in that said legs (12, 16) are provided with windows (11), and heads of thumb screws (10) are accessible therethrough for bolting said measuring jaws (6) to said legs (12, 16), said thumb screws (10) penetrating through contact faces (7) between said measuring jaws (6) and said legs (12, 16) extending parallel to said measuring arm.

**2.** The caliper of claim 1, characterized in that said sliding attachment (5) comprises a digital calculating unit (13) and a push-button for zeroing said calculating unit (13).

**3.** The caliper of claim 1 or 2, characterized in that said measuring jaws (6) are provided with two contact surfaces (7, 7a) being inclined to each other by an angle of 90 °.

**4.** The caliper of any of claims 1 - 3, characterized in that the measuring jaws (6), too, comprise windows with said thumb screw (15) for attaching measuring pins (18).

**Revendications**

**1.** Pied à coulisse comprenant une règle graduée (1) et un coulisseau (5) coulissant sur la règle graduée (1), dans lequel une extrémité de la règle graduée (1) ainsi que le coulisseau (5) présentent chacun un prolongement (12,16), des becs de mesure (6) interchangeables de formes différentes pouvant être vissés sur les prolongements (12,16), caractérisé en ce que les prolongements (12,16) sont dotés de fenêtre (11) permettant d'accéder à des têtes de vis molatées (10) et à l'aide desquelles les becs de mesure (6) peuvent être vissées sur les prolongements (12,16), les vis moletées (10) traversant des surfaces de contact (7) situées entre les becs de mesure (6) et les prolongements (12,16) et parallèles à la règle graduée.

**2.** Pied à coulisse selon la revendication 1, caractérisé en ce que le coulisseau (5) contient une unité de calcul numérique (13) ainsi qu'une touche de réinitialisation de l'unité de calcul (13).

**3.** Pied à coulisse selon la revendication 1 ou 2, caractérisé en ce que les becs de mesure (6) sont dotés de deux surfaces de contact (7,7a) qui forment entre elles un angle de 90°.

**4.** Pied à coulisse selon l'une ou plusieurs des revendications 1 à 3, caractérisé en ce que les becs de mesure (6) comprennent également une fenêtre avec la vis moletée (15) pour fixer un micromètre (18).

*Fig.1*

13

5

1

10c

16

2

12a

8

8

10a

3

7

15a

7a

9a

6a

6a

8

4a

15a

18a

11

5

13

1

10b

16

12b

6b

10c

2

3

*Fig.2*

7

4b

4b

Fig.4

Fig.3

Fig.7

Fig.5

Fig.6